# EUROPEAN PATENT SPECIFICATION

(11) **EP 2 457 480 B1**
(45) Date of publication and mention of the grant of the patent: **08.01.2014**
(21) Application number: 11183119.4
(22) Date of filing: 28.09.2011
(51) Int. Cl.: A47K 3/00, B32B 21/04, B32B 21/08, B32B 21/13, B32B 21/14, B63B 3/00

(54) **Method to produce a multilayer structure**
Verfahren zum Herstellen einer mehrschichtigen Struktur
Procédé pour produire une structure multicouche

(30) Priority: 25.11.2010 IT UD20100216
(43) Date of publication of application: 30.05.2012
(73) Proprietor: Falegnameria Tradizionale di Marco Olivieri, 34070 Capriva Del Friuli (GO) (IT)
(72) Inventor: Olivieri, Marco, 34170 Gorizia (IT)
(74) Representative: Petraz, Gilberto Luigi

(56) References cited:
- EP-A1- 1 584 461
- EP-A1- 2 030 747
- GB-A- 1 318 636

## Description

### FIELD OF THE INVENTION

The present invention concerns a method to produce a multilayer structure to produce shaped objects, also and especially large size objects, such as for example the hull of a boat, a bathtub, a piece of furniture or other, and the method to make it. The structure comprises a plurality of layers of wood, disposed one above the other and each one made with sheets, strips, laths, also interlaced with respect to each other, plates, veneers or other wood elements. The structure is first shaped dry, layer after layer, using a male or female mold, to make it assume the profile and shape of the three-dimensional object that is to be obtained, which may have surfaces with any radius and type of curvature whatsoever: Subsequently a filling material is conveyed between the layers, which holds them glued together in the desired shape.

### BACKGROUND OF THE INVENTION

Different types of multilayer structure are known, both completely made of wood, like plywood, consisting of sheets of wood glued together under pressure, with the fibers disposed perpendicularly and alternately, and also made of composite materials, in which layers of wood material alternate with layers of reinforcement material, not made of wood, such as natural or synthetic fibers, polymers, rockwool, glass fibers, carbon fibers or other.

Usually multilayer structures completely made of wood are made in the form of panels, normally flat, of bigger or smaller size, in the range of one or more square meters and have a good resistance in all directions. Subsequently they are cut, shaped and held together with glues, or mechanical means, in order to achieve the desired product. However, they have the disadvantage that they are not easy to model, especially when it is desired to make products with very small radiuses of curvature or with curvatures varying in several directions.

There is also a known technique for making multilayer structures by disposing pre-glued sheets of plywood between two rigid molding elements, known as mold and counter-mold, and subjecting the whole to great pressure. In this case the problems to be solved are mainly those concerning the high cost, especially of the mold, which must be made with great accuracy, and the difficulty of spreading large surfaces with glue, preventing the latter from polymerizing before the parts are glued together.

It is also known to make multilayer structures of wood directly on a male or female mold, by disposing very thin strips or sheets of wood, from some tenths of a millimeter to a few millimeters, on the surface of the mold itself, so as to form a first layer, on which other sheets or strips of wood are glued, usually crossing them with respect to those of the layer below, so as to form a second layer. In the same way, the process is continued by gluing other sheets or strips of wood to form possible other layers, until the desired rigidity is conferred on the structure. Although this lamellar construction technique does allow to obtain very small radiuses of curvature, and with curvatures varying in several directions, it is complex and costly because it requires highly specialized personnel and long processing times.

Multilayer structures made of composite materials are also, usually, made directly on a male or female mold, which reproduces the shape of the object to be made, or the negative thereof, such as for example the hull of a boat or a part of it. In this case, before being placed on the mold or on the layer below, each single layer is pre-impregnated with resin in a fluid state which, as it subsequently dries, acts as an amalgamating product for the different layers, itself becoming a component of the structure. These multilayer structures made of composite materials and the relative method of production also have the disadvantage of being complex and costly, requiring highly specialized personnel and long processing times.

One purpose of the present invention is to achieve a multilayer structure exclusively or almost exclusively made of wood, which allows to obtain three-dimensional products, also and especially large size products, such as for example a bathtub, a piece of furniture, civil engineering structures or the hull of a boat, even tens of meters long, also having very small radiuses of curvature, that is, in the range of a few millimeters, and with curvatures varying in any direction whatsoever.

Another purpose of the present invention is to perfect a method to achieve a multilayer structure made exclusively or mainly of wood, which consists of simple and numerically limited working steps, which requires the use of equipment and apparatuses that are cheap and easily found on the market, and which requires a limited working time.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a multilayer structure obtained with a method according to the present invention comprises a plurality of layers superimposed one on top of the other, each of which is made with one or more elements of wood material, such as for example sheets of wood with thicknesses and widths proportionate to the radiuses of curvature needed for the sizes of the object to be made.

According to one characteristic of the method of the present invention, at least one of the elements is provided with at least a cavity, understood as a space made inside the solid mass, that is, for example, a notch, a hollow, an incision, a groove, a shaping, a recess, a micro-channel or a hole, into which a filling material is inserted that functions as a glue for each layer with the adjacent layer. The filling material is for example an infusion resin, or resins of polyester, bismaleimide, epoxy, phenol, cyanate ester, polyamide, natural or other type, sufficiently fluid and/or with the characteristics suitable for the particular design, well known to any person of skill in the art.

The cavities are sufficiently large to allow the infusion resin to completely penetrate inside them, between the wood fibers, and to reach all the interstices between the different elements of wood material that make up the different layers of the structure: at the same time they must not exceed certain measurements known to the person of skill in the art, so as to prevent obtaining three-dimensional areas full of resin that do not produce a gluing effect between the layers of wood and which would be fragile in the event of an impact or vibration, and which could cause dangerous phenomena of self-ignition during the infusion step.

Advantageously, but not necessarily, in the same element there may be multiple cavities, disposed on the surface, so as to form a lattice in which the filling material is inserted diffusely, and/or transversely (in particular in the intermediate layers), by means of through holes or micro-holes.

Advantageously, but not necessarily, each cavity is disposed parallel to the fibers of the wood material of the above elements.

Advantageously, but not necessarily, each cavity is made by molding, pressing or forming of the elements of wood material, or by heading, laser incision or removal of material.

According to a variant, the multilayer structure obtained with the method according to the present invention can be the sandwich type, with the disposition between two external layers as described above of at least a central layer which functions as a core of sheets that can be balsa wood or synthetic material or other material, also provided with at least a cavity.

The method to make a structure according to the present invention comprises a first step during which on at least one of the elements of wood material of each layer at least one cavity is made, as defined above; a second step in which the first layer is disposed dry on the surface of a male or female mold; a third step in which each of the successive layers is disposed, also dry, on the surface of the previous layer; and a fourth step during which a filling material, for example the resin as described above, which functions as a glue for each of the layers with the adjacent layer, is inserted into the cavities with the vacuum infusion technique.

In this way the quantity of filling material is reduced to a minimum, and therefore the double advantage is obtained of reducing both the cost and also the weight of the multilayer structure.

According to a variant, associated with at least one of the layers of wood material at least a layer of fabric is provided, which can be disposed outside an external layer and/or between two adjacent layers.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a front view, schematized and partly in section, of a structure obtained with a method according to the present invention in one step of production;
- fig. 2 is an enlargement of the detail A in fig. 1;
- fig. 3 is a section from III to III in fig. 2;
- fig. 4 is a sectioned detail taken from fig. 2, of only the structure obtained with a method according to the present invention;
- fig. 5 is a section from V to V in fig. 4.

### DETAILED DESCRIPTION OF A PREFERENTIAL FORM OF EMBODIMENT

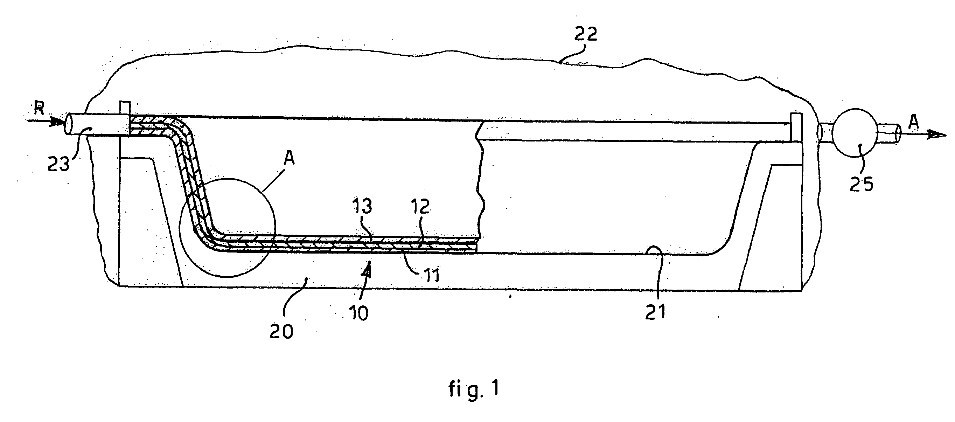

With reference to fig. 1, a multilayer structure 10 obtained with a method according to the present invention which in this case has the shape of a bathtub, comprises a plurality of layers, in this case three, identified by the reference numbers 11, 12 and 13, superimposed one on top of the other. It is clear that the number of layers can vary depending on the overall thickness to be obtained and on the mechanical resistance to be conferred on the whole multilayer structure 10.

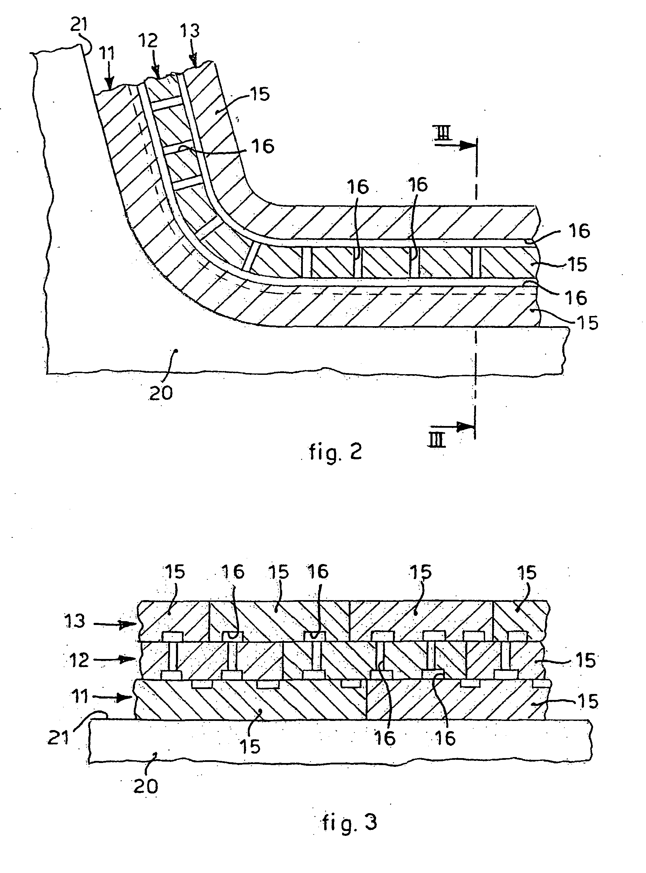

Each layer 11, 12 and 13 (figs. 2, 3, 4 and 5) in turn comprises a plurality of elements 15, adjacent to each other and each consisting of a sheet or strip or lath of wood material, having a thickness comprised between some tenths of a millimeter and some millimeters depending on its radius of curvature which it will have in the multilayer structure 10, and a width from about 5 mm to about 80 mm. For example, for radiuses of curvature equal to or less than 50 mm we will use elements 15 having a maximum thickness of 0.6 mm; for radiuses of curvature from 50 mm to 80 mm we will use elements 15 having a maximum thickness of 1.0 mm; for radiuses of curvature from 80 mm to 120 mm we will use elements 15 having a thickness of 2.0 mm.

The central layer 12, also called core, may advantageously be made of balsa.

Each element 15 is provided with one or more cavities, generally denoted by the reference number 16, which mainly consist of grooves, incisions, notches, micro-channels or longitudinal channels adjacent to a surface of the element 15 and parallel to the fibers of the wood material of which each element 15 is made. For example, for elements 15 up to 0.6 mm thick, the cavities 16 will have a maximum depth of 0.3 mm and a width comprised between 0.3 mm and 1.5 mm; elements 15 that are 1.0 mm thick can have the cavities 16 0.5 mm deep and from 0.3 mm to 1.5 mm wide; elements 15 that are 2.0 mm thick can have the cavities 16 1.3 mm deep and from 0.3 mm to 3 mm wide. Furthermore, irrespective of the thickness of the element 15, the distance between two adjacent cavities 16 (interaxis) can vary from 0.5 mm to 6.0 mm. Moreover, compatibly with the thickness of the element 15, it will be advantageous to make the cavities 16 on both faces of the latter.

The cavities 16 can also comprise, in the intermediate layer 12, or the intermediate layers if there are more than one of them, transverse through holes having a diameter varying from 1 mm to 8 mm, depending on the thickness of the sheets and the distance between the transverse holes themselves, which will advantageously be such as to allow a complete impregnation of the wood fibers and will be directly proportional to the width of the element 15; indicatively, the distance between the transverse holes is about 20 mm.

According to a variant, the cavities 16 additionally or alternatively comprise furrows, incisions, notches, hollows, channels or micro-channels, transverse or inclined with respect to the fibers of wood material, which in combination with the longitudinal grooves can form a proper lattice of cavities 16 adjacent or not to a surface of the element 15.

Inside the cavities 16, as will be described in more detail hereafter, a filling material R is disposed, which functions as a permanent glue for the different layers 11, 12 and 13.

The cavities 16 have a depth that corresponds to a desired fraction of the thickness of the element 15, in any case suitable for the complete infusion/ diffusion of the filling material R inside them.

In this case, the filling material R consists of a resin, for example epoxy, polyester, bismaleimide or other resin suitable for the purpose and sufficiently liquid to be inserted in the cavities 16 by means of the known infusion method.

According to another variant, between each layer of wood 11, 12 and 13 and the adjacent one, a layer of fabric is interposed, not shown in the drawings, so as to improve and boost the performance of the multilayer structure 10.

By fabric we mean any technical fabric which is high-performance with respect to wood fibers, such as for example those based on glass fibers, carbon fibers, Kevlar or suchlike, or any natural fabric, such as for example linen, hemp, cotton, bamboo or mats of interwoven fabric, in order to obtain as natural a product as possible.

The multilayer structure 10 as described heretofore is obtained by means of the following method.

First of all a mold 20 is made (fig. 1), male or female, which in this case is the female type, which reproduces the shape of the object to be made which, as we have seen, in the case shown here is a bathtub.

Then a surface 21 of the mold 20 on which the structure 10 will be formed is varnished with anti-gluing products, such as waxes or suchlike.

If it is desired to obtain an object having a surface with a determinate color (white or other), a layer of gel-coat is applied on the surface 21, or other varnishing products for molds, of the desired color. Then, possibly, another layer called skin coat is obtained, by applying on top of the gel-coat one or more layers of 200 gr/m² glass fabric.

In any case, directly in contact with the surface 21 of the mold 20, if the skin coat layer is not present, or on the latter when it is present, a layer of fabric is preferably formed, with a weight in grams that depends on the level of protection and/or performance desired to be obtained; however, indicatively, this is at least 100 gr/m². The layer of fabric in any case remains invisible, even if the varnish is transparent.

Then, the first layer 11 is formed dry, by positioning the elements 15 made of wood adjacent to each other: these have thicknesses and widths proportional to the radiuses of curvature necessary for the sizes of the object to be obtained. In particular the elements 15 will be positioned so that their cavities 16 are disposed on the opposite side with respect to the surface 21 of the mold 20 (figs. 2 and 3).

The elements 15 are disposed parallel to each other and distanced from each other by the amount needed for the infusion of the filling material R, which functions as a glue, as will be described in more detail hereafter. The spacing may be obtained for example by stapling the parallel bands of elements 15 to each other.

According to a variant, the elements 15 can be interwoven with each other according to various techniques, similar for example to the techniques used for making wickerwork baskets.

The elements 15 are then held stationary in the desired position, either by means of glues (stick, spray, hot or other type), chemically compatible with the infusion resin that will be used afterward, and which do not produce chemical reactions that are unfavorable to the subsequent permanent gluing, or with mechanical means such as staples, nails, adhesive or bi-adhesive strips, weights, stitches or other known means that allow the layer 11 to remain in the required position.

Similarly, with other elements 15, the second layer 12 is made, dry, above the first layer 11, and the third layer 13 above the second layer 12, keeping them temporarily in their position with the attachment means described above. In particular, the elements 15 that make up the last layer 13 will be disposed so that their cavities 16 are facing toward the second layer 12 and in contact with it.

After having laid the last wood layer 13, a layer of fabric is disposed on top of it, with a weight in grams that depends on the level of protection and/or performance desired, but indicatively at least 100 gr/m². However, the layer of fabric will in any case remain invisible even in the event of transparent varnish.

Possibly, according to a variant, a layer of fabric is also interposed between each layer of wood 11, 12 and 13 and the adjacent one, so as to increase and improve the performance of the multilayer structure 10.

At this point, a hermetic sack 22 is disposed around the mold 20, of a known type, and one or more infusion channels 23 are prepared.

After a vacuum or an adequate depression has been obtained inside the hermetic sack 22 by taking in air A by means of a vacuum pump 25, the pipe downstream of the latter is inserted into a container, not shown in the drawings, containing infusion resin R, of a known type, possibly already pre-mixed.

Due to the effect of the depression created inside the hermetic sack 22, the resin R will enter by infusion into all the cavities 16 of the elements 15 and will also occupy the interstices between the fibers of the wood.

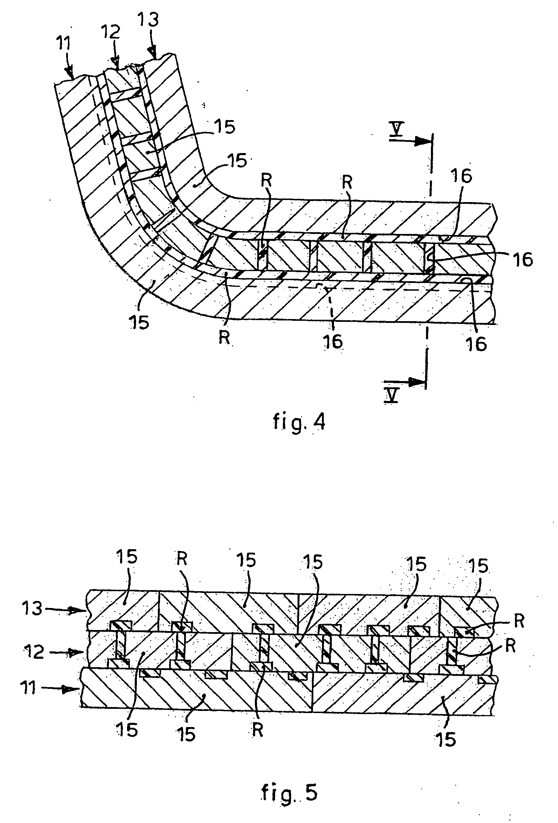

Once the infusion step is complete, the multilayer structure 10 is removed from the mold 20 (figs. 4 and 5), and depending on the type of resin R used, it will possibly be subjected to a post-baking step, in a suitable oven.

The temperatures to be kept in the workshop during the processing, and also those of the possible drying oven, will vary according to the characteristics of the resin R chosen, and are known to any person of skill in the art.

It is clear that modifications and/or additions of parts or steps may be made to the multilayer structure 10 and the relative method to produce it as described heretofore, without departing from the field and scope of the present invention.

It is also clear that, although the present invention has been described with reference to some specific examples, a person of skill in the art shall certainly be able to achieve many other equivalent forms of multilayer structure and methods to produce it, having the characteristics as set forth in the claims and hence all coming within the field of protection defined thereby.

## Claims

1. Method to produce a multilayer structure comprising a plurality of layers (11, 12, 13) superimposed one on top of the other, each of which comprises one or more elements (15) of wood material, **characterized in that** it comprises a first step during which at least a cavity (16) is made on at least one of said elements (15) of each layer (11), a second step in which the first of said layers (11) is disposed dry on the surface (21) of a mold (20), a third step in which each of the subsequent layers (12, 13) is disposed dry on the surface of the preceding layer (11, 12), and a fourth step during which a filling material (R), which acts as a glue to glue each of said layers (11, 12, 13) with the adjacent layer, is inserted into said cavity (16), using the vacuum infusion technique.

2. Method as in claim 1, **characterized in that** said cavity (16) is a groove adjacent to a surface of said element (5).

3. Method as in claim 2, **characterized in that** said grove is disposed parallel to the fibers of said wood material.

4. Method as in claim 2, **characterized in that** said groove is disposed transversely, or with variable angles, with respect to the fibers of said wood material.

5. Method as in any claim hereinbefore, **characterized in that** said elements (15) have a width comprised between a few millimeters and some tens of millimeters, and are disposed parallel to each other and distanced from each other by the distance needed for the infusion of said filling material (R).

6. Method as in claim 5, **characterized in that** the space between said elements (15) is obtained by stapling together the parallel bands of said elements (15).

7. Method as in any claim hereinbefore, **characterized in that** said elements (15) are interlaced with respect to each other.

8. Method as in any claim **characterized in that** said cavity (16) is a transverse through hole which passes through the entire thickness of the corresponding element (15).

9. Method as in any claim hereinbefore, **characterized in that** said cavities (16) are made by means of molding, pressing or forming of said elements (15) or by means of heading, laser incision or a process of removing material.

10. Method as in any claim hereinbefore, **characterized in that** at least a layer of fabric is provided, associated with at least one of said layers (11, 12, 13) of wood material.

## Patentansprüche

1. Verfahren zur Herstellung einer mehrschichtigen Struktur, die mehrere Schichten (11, 12, 13) umfasst, die übereinander gelagert sind und die jeweils ein oder mehrere Elemente (15) aus Holz umfassen, **dadurch gekennzeichnet, dass** das Verfahren einen ersten Schritt umfasst, in dem auf mindestens einem der Elemente (15) jeder Schicht (11) mindestens ein Hohlraum (16) erzeugt wird, einen zweiten Schritt, in dem die erste der Schichten (11) trocken auf der Oberfläche (21) eines Formwerkzeugs (20) angeordnet wird, einen dritten Schritt, in dem jede der darauffolgenden Schichten (12, 13) trocken auf der Oberfläche der vorhergehenden Schicht (11, 12) angeordnet wird, und einen vierten Schritt, in dem mit Hilfe der Vakuuminfusionstechnik in den Hohlraum (16) ein Füllmaterial (R) eingeführt wird, das als ein Klebstoff zum Verkleben jeder der Schichten (11, 12, 13) mit der benachbarten Schicht dient.

2. Verfahren nach Anspruch 1, **dadurch gekennzeichnet, dass** der Hohlraum (16) eine Rille ist, die an eine Oberfläche des Elements (15) angrenzt.

3. Verfahren nach Anspruch 2, **dadurch gekennzeichnet, dass** die Rille parallel zu den Fasern des Holzes angeordnet ist.

4. Verfahren nach Anspruch 2, **dadurch gekennzeichnet, dass** die Rille im Verhältnis zu den Fasern des Holzes quer oder in variablen Winkeln angeordnet ist.

5. Verfahren nach einem der vorhergehenden Ansprüche, **dadurch gekennzeichnet, dass** die Elemente (15) eine Breite zwischen wenigen Millimetern und einigen zehn Millimetern aufweisen und parallel zueinander angeordnet sind sowie mit dem Abstand voneinander beabstandet sind, der für die Infusion des Füllmaterials (R) notwendig ist.

6. Verfahren nach Anspruch 5, **dadurch gekennzeichnet, dass** der Zwischenraum zwischen den Elementen (15) erzielt wird, indem die parallelen Bänder der Elemente (15) aneinander geheftet werden.

7. Verfahren nach einem der vorhergehenden Ansprüche, **dadurch gekennzeichnet, dass** die Elemente (15) miteinander verschränkt sind.

8. Verfahren nach einem der vorhergehenden Ansprüche, **dadurch gekennzeichnet, dass** der Hohlraum (16) eine quer liegende Durchgangsöffnung ist, die durch die gesamte Dicke des entsprechenden Elements (15) verläuft.

9. Verfahren nach einem der vorhergehenden Ansprüche, **dadurch gekennzeichnet, dass** die Hohlräume (16) durch Ausformen, Pressen oder Umformen der Elemente (15) oder durch Stauchen, Laserschneiden oder einen Vorgang der Materialentfernung hergestellt werden.

10. Verfahren nach einem der vorhergehenden Ansprüche, **dadurch gekennzeichnet, dass** mindestens eine textile Schicht bereitgestellt ist, die mit mindestens einer der Schichten (11, 12, 13) aus Holz verbunden ist.

## Revendications

1. Procédé de production d'une structure multicouche comprenant une pluralité de couches (11, 12, 13) superposées les unes sur les autres, chacune comprenant un ou plusieurs éléments en bois (15), **caractérisé en ce qu'**il comprend une première étape durant laquelle au moins une cavité (16) est faite sur au moins l'un desdits éléments (15) de chaque couche (11), une seconde étape dans laquelle la première desdites couches (11) est disposée sèche sur la surface (21) d'un moule (20), une troisième étape dans laquelle chacune des couches suivantes (12, 13) est disposée sèche sur la surface de la couche précédente (11, 12), et une quatrième étape durant laquelle un matériau de remplissage (R), agissant comme de la colle pour coller chacune desdites couches (11, 12, 13) avec la couche adjacente, est introduite dans ladite cavité (16), en utilisant la technique de l'infusion sous vide.

2. Procédé selon la revendication 1, **caractérisé en ce que** ladite cavité (16) est une rainure adjacente à une surface dudit élément (15).

3. Procédé selon la revendication 2, **caractérisé en ce que** ladite rainure est disposée parallèlement aux fibres dudit bois.

4. Procédé selon la revendication 2, **caractérisé en ce que** ladite rainure est disposée transversalement, ou avec des angles variables, par rapport aux fibres dudit bois.

5. Procédé selon l'une ou l'autre des revendications précédentes, **caractérisé en ce que** lesdits éléments (15) ont une largeur comprise entre quelques millimètres et quelques dizaines de millimètres, et sont disposés parallèlement les uns aux autres et distants les uns des autres par la distance nécessaire à l'infusion dudit matériau de remplissage (R).

6. Procédé selon la revendication 5, **caractérisé en ce que** l'espace entre lesdits éléments (15) est obtenu en agrafant entre elles les bandes parallèles desdits éléments (15).

7. Procédé selon l'une ou l'autre des revendications précédentes, **caractérisé en ce que** lesdits éléments (15) sont entrelacés les uns aux autres.

8. Procédé selon l'une ou l'autre des revendications précédentes, **caractérisé en ce que** ladite cavité (16) est un trou traversant transversal passant à travers l'épaisseur totale de l'élément correspondant (15).

9. Procédé selon l'une ou l'autre des revendications précédentes, **caractérisé en ce que** lesdites cavités (16) sont faites par moulage, pressage ou façonnage desdits éléments (15) ou par forage, incision laser, ou un procédé de retrait de matière.

10. Procédé selon l'une ou l'autre des revendications précédentes, **caractérisée en ce qu'**au moins une couche de tissu est prévue, associée avec au moins l'une desdites couches (11, 12, 13) en bois.
